Europäisches Patentamt

European Patent Office

Office européen des brevets

(11) Veröffentlichungsnummer: **0 418 212 A2**

## (12) EUROPÄISCHE PATENTANMELDUNG

(21) Anmeldenummer: 90890247.1

(22) Anmeldetag: 22.08.90

(51) Int. Cl.5: **G01B 5/00**

(30) Priorität: **12.09.89 AT 2128/89**

(43) Veröffentlichungstag der Anmeldung:
**20.03.91 Patentblatt 91/12**

(84) Benannte Vertragsstaaten:
**BE CH DE FR GB IT LI LU NL SE**

(71) Anmelder: **Rieder, Heinz**
**Riedersbach 90**
**A-5120 St. Pantaleon(AT)**

Anmelder: **Schwaiger, Max**

**A-5121 Ostermiething 298(AT)**

(72) Erfinder: **Rieder, Heinz**
**Riedersbach 90**
**A-5120 St. Pantaleon(AT)**
Erfinder: **Schwaiger, Max**

**A-5121 Ostermiething 298(AT)**

(74) Vertreter: **Hübscher, Heiner, Dipl.-Ing. et al**
**Spittelwiese 7**
**A-4020 Linz(AT)**

(54) Schutzgehäuse zur Aufnahme von Massstab und längsverstellbarer Abtasteinheit.

(57) Ein Schutzgehäuse zur Aufnahme von Maßstab und längsverstellbarer Abtasteinheit bei Längenmeßsystemen besteht aus einem rohrförmigen, insbesondere in seiner Grundform einen rechteckigen Querschnitt aufweisenden, den Maßstab (M) abstützenden Längsträger (1), der einen Durchführungsschlitz (3) für einen mit einer Abtasteinheit (A) kuppelbaren Mitnehmer (S) besitzt und dessen Rohrenden durch Endstücke (5) abschließbar sind, die Montageblöcke für das Meßsystem bilden und über die Enden des rohrförmigen Längsträgers (1) vorragen. Zur Erleichterung der Montage, Abdichtung und Ausrichtung besitzen die Endstücke (5) angeformte Einsatzteile (8, 12) mit einem an die lichte Rohröffnung angepaßten Stirnteil (8) und zwischen diesem Stirnteil und dem mit einem Absatz (12) an das Rohrende stoßenden Blockkörper (6) eine Umfangsnut (14) oder -rille zur Aufnahme einer Dichtung (16).

## FIG.2

## SCHUTZGEHÄUSE ZUR AUFNAHME VON MASSSTAB UND LÄNGSVERSTELLBARER ABTASTEINHEIT

Die Erfindung betrifft ein Schutzgehäuse gemäß dem Oberbegriff des Patentanspruches 1.

Längenmeßsysteme, für die das Schutzgehäuse bestimmt ist, können sowohl absolute Längenmeßsysteme als auch Inkrementalmeßsysteme sein, wobei in beiden Fällen der Maßstab bzw. eine Meßteilung des Maßstabes Ober die mittels des Mitnehmers verstellbare Abtasteinheit zur Erzeugung von Meßsignalen bzw. zum Ablesen des Maßstabes nach optoelektronischen, kapazitiven oder induktiven Abtastprinzipien abtastbar ist. Es ist notwendig, den Innenraum des rohrförmigen Längsträgers vor Verschmutzung zu schützen. Über dies soll gewährleistet sein, daß der Maßstab bei der Montage mit Hilfe der Montageblöcke in der richtigen Meßlage liegt. Es ist bekannt, die Montageblöcke als Formteile auszubilden, die an den gegengleich zu Ansätzen der Formteile abgesetzten Enden des rohrförmigen Trägers montiert werden. Nachteilig ist hier eine aufwendige Bearbeitung sowohl der Montageblöcke als auch der Rohrenden, wobei häufig keine absolut genaue Ausrichtung der Montageblöcke erzielt wird und auch die notwendige Abdichtung der Rohrenden nicht erreichbar wird.

Aufgabe der Erfindung ist die Schaffung eines Schutzgehäuses der eingangs genannten Art, bei dem eine genaue Ausrichtung der Montageblöcke zum Längsträger mit einfachen Mitteln gewährleistet wird, nur eine einfache Bearbeitung des Längsträgers insbesondere durch rechtwinkeliges Ablängen ermöglicht wird und bei dem das Problem einer einwandfreien Endabdichtung der Enden des Längsträgers sowie eine geschützte Unterbringung des Maßstabendes und eine abgedichtete Montage der Dichtlippenenden gesichert ist.

Die gestellte Aufgabe wird durch die Merkmale des Patentanspruches 1 gelöst.

Bei der erfindungsgemäßen Konstruktion werden die Endstücke mit ihren Einsatzteilen durch einfaches Einschieben an den Enden des rohrförmigen Längsträgers angebracht, wobei ein dichter Abschluß durch die in der Umfangsnut oder -rille angebrachte Dichtung gewährleistet ist. Auch die Ausrichtung der Endstücke gegenüber dem rohrförmigen Längsträger wird durch das Einschieben der Einsatzteile erleichtert. Dabei kann auch in dem Übergangsbereich vom Blockkörper auf den Einsatzteil ein kurzes, das Profil der lichten Rohröffnung wiederholendes Ansatzstück an der blockseitigen Nut- bzw. Rillenflanke vorgesehen werden, um die Führung des Einsatzteiles im rohrförmigen Längsträger zu verbessern und auch die Nut bzw. Rille blockseitig besser abzuschließen.

Eine vorteilhafte Weiterbildung entnimmt man dem Anspruch 2. Bei im Blockkörper vorgesehenen Aufnahmevertiefungen reichen die Enden der Dichtungslippen entlang des Stirnteiles bis in ihn hinein und schließen die dann nur bis zu ihnen geführte Umfangsnut oder -rille endseitig ab.

Zwei mögliche Ausbildungen für die Anbringung der Maßstabenden sind in den Ansprüchen 3 und 4 angegeben. Dabei ermöglicht die Ausbildung nach Anspruch 3 die Anordnung eines Spaltes zwischen den Maßstabenden und dem Stirnteil zum Ausgleich eines verschiedenen Wärmedehnungsverhaltens von Maßstab und Längsträger, wogegen bei der Ausbildung nach Anspruch 4 der z. B. aus Glas hergestellte Maßstabkörper mit seinen Enden elastisch auf den Dichtungen aufruht.

Bei einer Ausbildung gemäß Anspruch 5 paßt sich das Dichtungsmaterial genau an den freigelassenen Hohlraum an und dichtet auch Fugen zwischen Einsatzteil und Rohröffnung ab, wobei überdies eine formschlüssige Befestigung der Endstücke am Rohrkörper erreicht wird. Das Ausvulkanisieren kann bei gegenüber dem Rohrkörper ausgerichteten Endstücken erfolgen, wodurch die Ausrichtung eingefroren wird. Zusätzlich ist es möglich, Sicherungen gemäß Anspruch 6 vorzusehen.

Die erfindungsgemäße Ausführung des Schutzgehäuses ermöglicht ein Befestigungsverfahren gemäß Anspruch 7.

Weitere Einzelheiten und Vorteile des Erfindungsgegenstandes entnimmt man der nachfolgenden Zeichnungsbeschreibung. In der Zeichnung ist der Erfindungsgegenstand beispielsweise veranschaulicht. Es zeigen

Fig. 1 ein Endstück von der Seite des Einsatzteiles her gesehen in Ansicht,

Fig. 2 einen rohrförmigen Längsträger im Längsschnitt mit in Seitenansicht dargestelltem Montageblock,

Fig. 3 eine Ausführungsvariante des Endstückes und

Fig. 4 einen Längsschnitt gemäß Fig. 2 zu Fig. 3.

In der Zeichnung wurden, da sie allgemeiner Stand der Technik und dem Fachmann bekannt sind, der Maßstab M, die Abtasteinheit A, der Mitnehmer S und die Dichtlippen D jeweils nur schematisiert in ihren Umrissen in strichpunktierter Darstellungsweise eingezeichnet.

Für einen Maßstabkörper M, der als flach rechteckig-prismatischer Glaskörper ausgebildet sein kann und für eine unmittelbar am Maßstabkörper M geführte Abtasteinheit A ist ein rohrförmiges Schutzgehäuse 1 vorgesehen, dessen Decke 2 zu einem Träger verstärkt ist, wogegen der Decke gegenüberliegend ein Durchführungsschlitz 3 für einen Mitnehmer S vorgesehen wird. Der Maßstabkörper M greift mit dem einen Längsrand in eine schräg in der Ecke zwischen Decke 2 und einer Seitenwand des Trägers 1 vorgesehene Nut 17 ein und ragt etwa unter einem Winkel von 45° in den Rohrhohlraum des Trägers ein. Zu beiden Seiten des Schlitzes 3 sind im Trägerkörper Halterungsnuten 4 für die Innenränder von Dichtlippen D angebracht, die elastisch federnd aneinanderliegend angebracht den Schlitz 3 abschließen und von dem schwertartigen Mitnehmer S auseinandergedrängt werden. Die beschriebene Ausführung ist an und für sich bekannt.

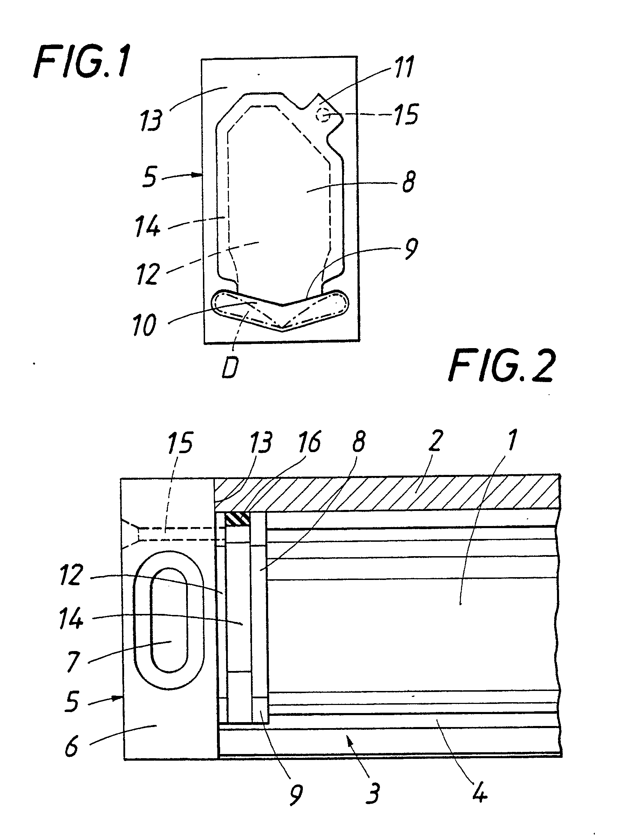

Für die Enden des rohrförmigen Längsträgers 1 sind Endstücke 5 vorgesehen, die aus einem außerhalb des Rohrkörpers verbleibenden Montageblock 6 mit Montageöffnung 7 zum Anbringen einer Befestigungsschraube und einem Einsatzteil 8 bestehen, dessen Stirnteil seitlich und oben an die lichte Rohröffnung angepaßt ist, wogegen der untere Rand 9 für die Auflage an der Oberseite der in die Nuten 4 eingesetzten Dichtlippen D bestimmt ist. Der untere Rand bildet zugleich den oberen Rand einer hier im Block 6 vorgesehenen Aufnahmevertiefung 10 für die Enden dieser Dichtlippen D. Ein Profilfortsatz 11 ist für den Verschluß der Aufnahmenut 17 für den Maßstab M bestimmt. Das in Fig. 1 ersichtliche stirnseitige Profil findet seine Wiederholung in einem kurzen Ansatz 12. Neben der abgesetzten Stirnseite 13 des Blockes 6 zwischen den Teilen 8 und 12 ist eine vom Rand 9 ausgehende, also beidseits bis zur Oberseite der Aufnahme für die Dichtlippen D reichende Umfangsnut 14 vorgesehen, in der eine Bohrung 15 mündet, über die flüssiges Dichtungsmaterial, insbesondere Silikongummi, eingespritzt werden kann.

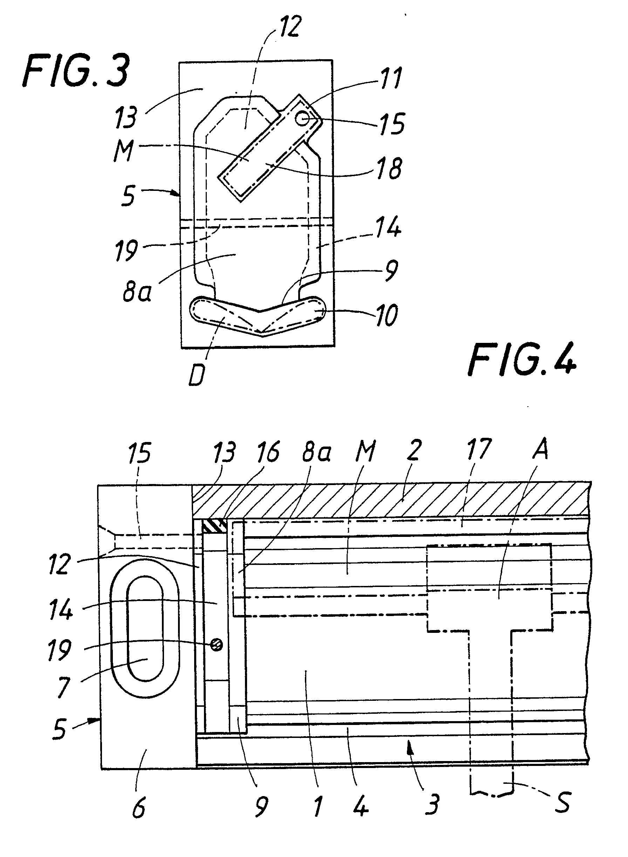

Bei der Ausführung nach den Fig. 3 und 4 reicht der Maßstab körper M durch eine Ausnehmung 18 im Stirnteil 8a bis zur Umfangsnut 14, so daß die Maßstabenden am Dichtungsmaterial anliegen.

Bei der Montage werden nach dem Anbringen des Maßstabes M, dem Einsetzen der Abtasteinheit A und der Montage der Dichtlippen D die Endstücke 5 bei auf einer Richtplatte aufliegendem Längsträger 1 angesetzt, so daß die Außenseite der Blöcke 5 mit den Profilaußenseiten des rohrförmigen Längsträgers 1 fluchtet. Anschließend wird über 15 Silikongummi eingespritzt, so daß die Dichtung 16 entsteht, wobei auch Fugen zwischen 8 und der lichten Rohröffnung sowie den Dichtlippen D bzw. nach den Fig. 3 und 4 auch zwischen 8a und dem Maßstab M ausgefüllt werden. Die auf diese Weise befestigten Endblöcke 5 können durch vorzugsweise parallel zur Öffnung 7 im Bereich der Nut 14 in durchgehende Bohrungen eingesetzte Sicherungsstifte 19 gesichert werden.

## Ansprüche

1. Schutzgehäuse zur Aufnahme von Maßstab (M) und längsverstellbarer Abtasteinheit (A) bei Längenmeßsystemen, bestehend aus einem rohrförmigen, insbesondere in seiner Grundform einen rechteckigen Querschnitt aufweisenden, den Maßstab (M) abstützenden Längsträger (1), der an einer Schmalseite einen Durchführungsschlitz (3) für einen mit der Abtasteinheit (A) kuppelbaren Mitnehmer (5) besitzt und dessen Rohrenden durch Endstücke (5) abschließbar sind, die Montageblöcke für das Meßsystem bilden und über die Enden des rohrförmigen Längsträgers (1) vorragen können, dadurch gekennzeichnet, daß die Endstücke (5) angeformte Einsatzteile (8, 12) mit einem an die lichte Rohröffnung angepaßten Stirnteil (8) und zwischen diesem Stirnteil und dem mit einem Absatz an das Rohrende stoßenden Blockkörper (6) eine Umfangsnut (14) oder -rille zur Aufnahme einer Dichtung (16) aufweisen.

2. Schutzgehäuse nach Anspruch 1, dadurch gekennzeichnet, daß bei Anordnung von den Durchführungsschlitz (3) abschließenden Dichtungslippen (L), im Stirnteil (8) oder neben diesem im Absatz des Blockkörpers (6) angepaßte Aufnahmevertiefungen (10) für die Enden dieser Dichtungslippen (L) vorgesehen sind.

3. Schutzgehäuse nach Anspruch 1oder 2, dadurch gekennzeichnet, daß an der zum Inneren des Längsträgers (1) weisenden Seite des Stirnteiles (8) ein Abschlußansatz (11) für eine Halterungsnut für den Maßstabkörper (M) vorgesehen ist.

4. Schutzgehäuse nach Anspruch 1 oder 2, dadurch gekennzeichnet, daß im Stirnteil (8a) eine mit ihrem Oberteil die Halterungsnut (17) des rohrförmigen Gehäuses (1) verlängern de, bis in die Umfangsnut (14) zur Aufnahme der Dichtung (16) reichende Ausnehmung (18) für das Ende des Maßstabes (M) vorgesehen ist, das sich an der Dichtung (16) abstützt.

5. Schutzgehäuse nach einem der Ansprüche 1 bis 4, dadurch gekennzeichnet, daß für die Umfangsnut (14) bzw. -rille wenigstens eine durch den Blockkörper nach außen führende Einspritzöffnung (15) zum Einspritzen von flüssigem, aushärtendem oder ausvulkanisierendem Dichtungsmaterial (16) vorgesehen ist.

6. Schutzgehäuse nach einem der Ansprüche 1 bis 5, dadurch gekennzeichnet, daß die Endstücke (5) über die Dichtungen (16) am Längsträger (1) befestigt und in ihrer Lage durch die Enden des Längsträgers und die Einsatzteile (8, 12) im Nutbereich durchsetzende Querstifte (19) gesichert sind.

7. Verfahren zum Anbringen der Endstücke bei einem Schutzgehäuse nach den Ansprüchen 1 bis 6, dadurch gekennzeichnet, daß die Endstücke (5) bei auf einer Richtplatte aufliegendem Längsträger (1) an diesen angesetzt werden, wobei wenigstens das eine Endstück erst nach der Montage des Maßstabkörpers (M) und der Dichtlippen (L) angebracht wird, daß nach dem Ansetzen der Endstücke (5) ebenfalls bei auf der Richtplatte aufliegenden Längsträger (1) und Endstücken (5) über die Einspritzöffnungen (15) Silikon-Dichtungsmasse eingespritzt wird und daß nach dem Ausvulkanisieren der Dichtungsmasse die Sicherungsstifte (19) angebracht werden.

*FIG.1*

*FIG.2*

FIG.3

FIG.4